# EUROPÄISCHE PATENTSCHRIFT

(11) **EP 2 010 404 B1**
(45) Veröffentlichungstag und Bekanntmachung des Hinweises auf die Patenterteilung: **26.10.2011**
(21) Anmeldenummer: 07722279.2
(22) Anmeldetag: 24.04.2007
(51) Int. Cl.: B60J 7/00

(54) **FAHRZEUGDACH MIT EINEM BEWEGBAREN DECKEL UND EINEM UNTER DIESEM ANGEORDNETEN ÖFFNUNGSFÄHIGEN ROLLO**
VEHICLE ROOF COMPRISING A MOVABLE COVER AND AN OPENABLE BLIND DISPOSED THEREUNDER
TOIT DE VEHICULE DOTE D'UN PANNEAU MOBILE ET D'UN STORE POUVANT S'OUVRIR, PLACE EN DESSOUS DUDIT PANNEAU

(30) Priorität: 24.04.2006 DE 102006019322
(43) Veröffentlichungstag der Anmeldung: 07.01.2009
(73) Patentinhaber: Webasto AG, 82131 Stockdorf (DE)
(72) Erfinder: GLASL, Sebastian, 68519 Viernheim (DE); ROCKELMANN, Andreas, 81249 München (DE); ADLHOCH, Christian, 81241 München (DE)
(74) Vertreter: Wiese, Gerhard
(86) Internationale Anmeldenummer: PCT/DE2007/000721
(87) Internationale Veröffentlichungsnummer: WO 2007/121734

(56) Entgegenhaltungen:
- EP-A- 1 238 840
- EP-A2- 1 006 012
- WO-A-01/94139
- DE-A1- 10 063 150
- DE-C1- 19 902 534

## Beschreibung

Die Erfindung betrifft ein Fahrzeugdach mit einem bewegbaren Deckel und einem unter diesem angeordneten öffnungsfähigen Rollo gemäß dem Oberbegriff des Patentanspruchs 1.

Ein gattungsgemäßes Fahrzeugdach ist vom Peugeot 1007 bekannt, bei dem ein Rollo mit seiner Vorderkante mit einem transparenten Deckel verbunden ist. Beim Verfahren des Deckels nach hinten zur Freigabe einer Dachöffnung rollt sich die Rollobahn auf eine Rollowelle auf, die an einem hinteren Dachteil gelagert ist.

Vom Renault Megane Festelement-Cabrio ist eine Lösung bekannt, bei der ein Rollo mit seiner Vorderkante an einem zwischen den A-Säulen quer verlaufenden Rahmenteil eingehakt werden kann. Das Rahmenteil ist ein Bestandteil des zusammenfaltbaren Cabriodachs, so dass das Rollo beim Öffnen des Cabriodachs automatisch mit diesem geöffnet wird.

Wenn ein Festelement-Cabriolet mit einem separat öffnungsfähigen Dachteil versehen ist (siehe beispielsweise DE 42 03 229 C2), muss dieses sehr weit nach hinten gefahren werden können. Eine Anbindung des Rollos an die Schiebedachmechanik (wie beim Peugeot 1007) ist dabei aus Platzgründen nicht möglich.

EP 100 6012 offenbart eine Rolloanordnung wie in Oberbegriff des Anspruchs 1.

Der Erfindung liegt die Aufgabe zugrunde, ein Fahrzeugdach zu schaffen, bei dem der Bedienkomfort und die Variationsmöglichkeiten verbessert werden.

Diese Aufgabe wird erfindungsgemäß durch die Merkmale des Patentanspruchs 1 gelöst. Vorteilhafte Ausgestaltungen der Erfindung sind in den Unteransprüchen angegeben.

Die Erfindung sieht im Kern vor, dass das Rollo zum einen mittels eines elektrischen Antriebs betätigbar ist, zum anderen jedoch auch von einem mit dem elektrischen Antrieb verbundenen Mitnehmer entkoppelbar ist, um manuell betätigbar zu sein.

Gemäß einer besonders vorteilhaften Ausführungsform wird für den Antrieb des bewegbaren Dachteils derselbe Antriebsmotor verwendet wie zum Antrieb des Rollos. Dadurch lässt sich ein Antriebsmotor einsparen. Bei einer Öffnung des bewegbaren Dachteils soll das Rollo ohnehin ebenfalls in eine Öffnungsposition verfahren werden um ein Flattern der Rollobahn zu vermeiden, so dass eine synchrone Bewegung mittels eines einzigen Antriebs leicht realisierbar ist.

Gemäß einer weiteren vorteilhaften Ausführungsform ist vorgesehen, dass der mit dem elektrischen Antrieb gekoppelte. Mitnehmer eine Rastnase aufweist, in die ein mit dem Auszugspriegel verbundener Rasthaken eingreift. Vorteilhaft wird das Entkoppeln des Auszugspriegels durch eine Anhebe- bzw. Kippbewegung eines am Auszugsspriegel vorgesehenen Griffstücks eingeleitet.

Nachfolgend wird ein erfindungsgemäßes Fahrzeugdach unter Bezugnahme auf die Zeichnung näher erläutert. Es zeigt:
- Fig. 1: einen schematischen Längsschnitt durch ein Fahrzeugdach bei geschlossenem bewegbaren Dachteil und geöffnetem Rollo;
- Fig. 2: das Fahrzeugdach gemäß Fig. 1 mit geschlossenem oder teilweise geöffnetem Rollo;
- Fig. 3: das Fahrzeugdach gemäß Fig. 2 mit teilweise geöffnetem bewegbaren Dachteil;
- Fig. 4: das Fahrzeugdach gemäß Fig. 2 mit geschlossenem Rollo beim Entkoppeln des Auszugspriegels;
- Fig. 5: das Fahrzeugdach gemäß Fig. 3 mit vollständig geöffneten Rollo,
- Fig. 6: eine schematische Draufsicht auf das Fahrzeugdach gemäß den Fign. 1 bis 5;
- Fig. 7a-c: einen schematischen Teillängsschnitt durch eine seitliche Längsführung eines Rollos mit drei verschiedenen Positionen des Mitnehmers und der Rasteinrichtung,
- Fig. 8: eine Detaildarstellung eines Rasthakens und des Mitnehmers;
- Fig. 9: einen Querschnitt durch den Auszugsspriegel im Bereich einer Griffmulde; und
- Fig. 10: eine Variante zur Figur 9 mit einer Griffleiste.

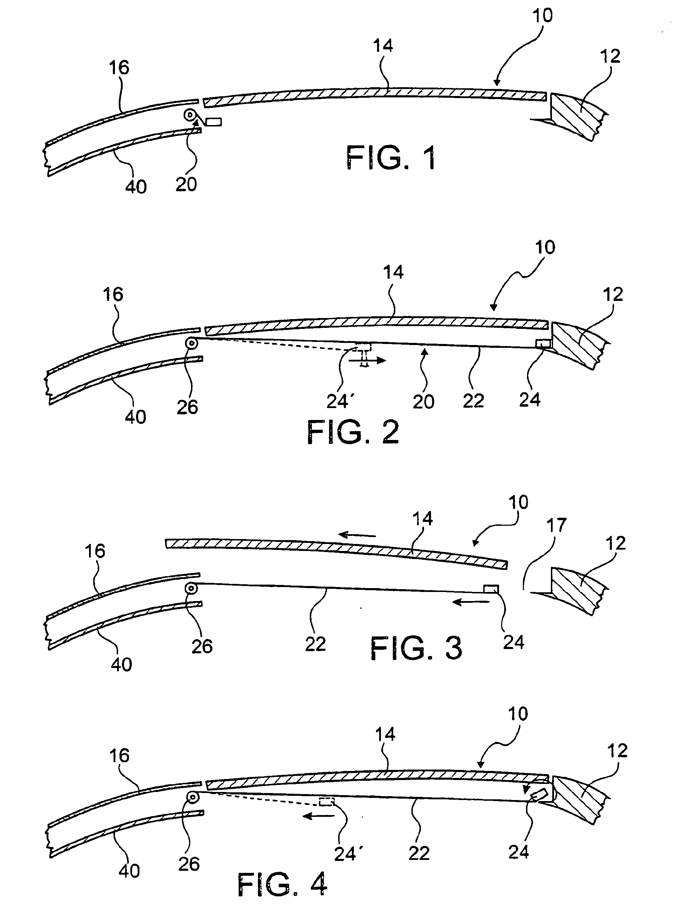

Das in Fig. 1 gezeigte Fahrzeugdach 10 setzt sich zusammen aus einem vorzugsweise als transparenter Deckel ausgebildeten bewegbaren Dachteil 14, dessen Vorderkante an einen die Oberkante einer Frontscheibe begrenzenden Windlauf 12 anschließt, und einem an eine Hinterkante des bewegbaren Dachteils 14 anschließenden benachbarten Dachteil 16, das im Ausführungsbeispiel von einem zeitweise feststehenden hinteren Dachteil eines insgesamt in einen nicht dargestellten Stauraum verfahrbaren Festelement-Cabriodachs gebildet wird. Das bewegbare Dachteil 14 ist jeweils mit einem vorderen Gleiter 141 und einem hinteren Gleiter 142 zu beiden Seiten an einer Führung längsverschiebbar geführt.

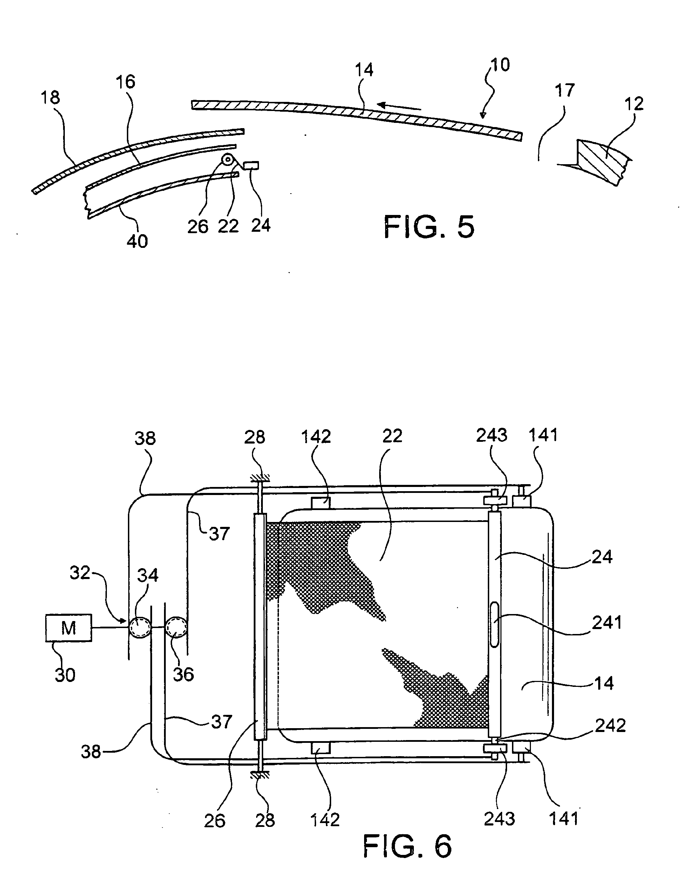

Das bewegbare Dachteil 14 ist mit seiner Hinterkante anhebbar und über das hintere Dachteil 16 verschiebbar. Dabei gibt es eine an der Vorderkante vom ' Windlauf 12 und an der Hinterkante vom hinteren Dachteil 16 begrenzte Dachöffnung 17 zumindest teilweise frei. Optional kann auch eine an das hintere Dachteil 16 anschließende Heckscheibe 18 (siehe Figur 5) über das hintere Dachteil 16 nach vorne verschoben werden, um dadurch eine zusätzliche Belüftungsöffnung im hinteren Teil des Fahrzeugs freizugeben. Die teilweise oder vollständige Öffnung des bewegbaren Dachteils 14 ist beim vorliegenden Fahrzeug als Fahrposition ausgebildet. Das heißt, dass das Fahrzeugdach 10 abgesehen vom geschlossenen Zustand sowohl mit einer nach Art eines Schiebedaches freilegbaren kleineren Dachöffnung 17 gefahren werden kann, als auch mit einer den Fahrzeuginnenraum nach oben vollständig freiliegenden Cabrio-Öffnung, zu deren Freigabe das zeitweise feststehende hintere Dachteil 16 mit dem bewegbaren Dachteil 14 und der Heckscheibe 18 in einen nicht dargestellten Stauraum im hinteren Bereich des Fahrzeugs verfahren wird.

Um den Fahrzeuginnenraum vor einer zu starken Sonneneinstrahlung zu schützen, ist unterhalb des bewegbaren Dachteils 14 ein Rollo 20 angeordnet. Dieses setzt sich zusammen aus einer aus einem flexiblen textilen Material oder einem Kunststoffmaterial bestehenden Rollobahn 22, einem am vorderen Ende der Rollobahn 22 befestigten Auszugsspriegel 24 und einer unterhalb der Vorderkante des hinteren Dachteil 16 gelagerten Rollowelle 26, auf die die Rollobahn 22 vollständig aufwickelbar ist (siehe Fign. 1 und 5).

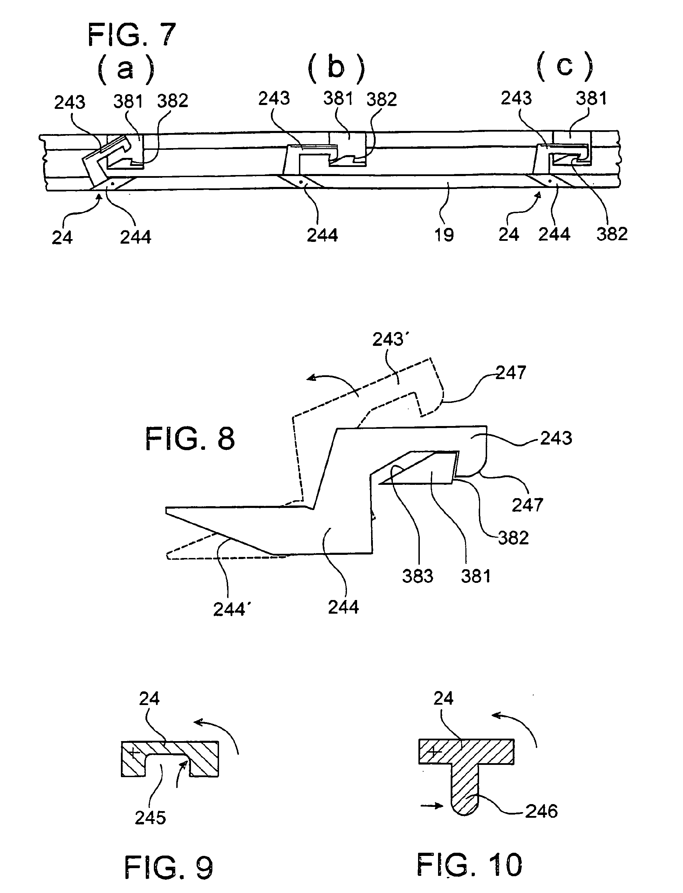

Der Auszugsspriegel 24 weist ein Griffstück 241 auf, dass auf der dem Fahrzeuginnenraum zugewandten Unterseite mit einer Griffmulde 245 (Figur 9) oder einer Griffleiste 246 (Figur 10) versehen ist. Der Auszugsspriegel 24 ist zu beiden Seiten der Dachöffnung 17 mittels jeweils eines Gleitstücks 244 an einer seitlichen Führung 19 (siehe Figur 7) längsverschiebbar gelagert. Das Gleitstück 244 weist an seiner unteren Fläche im hinteren Bereich eine abgeschrägte, nach hinten ansteigende Führungsfläche 244' auf. Das Gleitstück 244 ist in seinem vorderen Bereich mit einem sich hakenförmig nach vorn erstreckenden Rasthaken 243 verbunden. Der Rasthaken 243 weist an seiner Vorderkante im unteren Bereich eine Anlaufschräge 247 auf.

Das bewegbare Dachteil 14 ist im Bereich der vorderen Gleiter 141 durch Antriebskabel 37, die zug- und drucksteif in entsprechend geformten Kanälen der Führungen geführt sind, mit einem Ritzel 36 verbunden, das von einem elektrischen Antriebsmotor 30 über ein Getriebe 32 antreibbar ist. Der Antriebsmotor 30, das Getriebe 32 und das Ritzel 36 sind am hinteren Dachteil 16 gelagert. Sie werden nach unten ebenso wie die Rollowelle 26 von einem mit dem hinteren Dachteil 16 verbundenen Festhimmel 40 abgedeckt. Das Getriebe 32 weist ein synchron zum Ritzel 36 antreibbares weiteres Ritzel 34 auf, welches über zug- und drucksteif geführte Antriebskabel 38 mit jeweils einem Mitnehmer 381 verbunden ist, der bei geschlossenem Dachteil 14 nahe des vorderen Gleiters 141 an den Führungen 19 längsverschiebbar geführt ist. Der Mitnehmer 381 weist an seiner nach vorne gerichteten Fläche eine Rastnase 382 auf. An seiner Rückseite bildet der Mitnehmer 381 eine nach hinten abfallende Auflauframpe 383.

Wie aus den Fign. 7 und 8 ersichtlich, umgreift der mit dem Auszugsspriegel 24 verbundene Rasthaken 243 in einer ersten gekoppelten Betriebsstellung die Rastnase 382 am Mitnehmer 381. In dieser Stellung ist der vordere Auszugsspriegel 24 des Rollos 20 über den Mitnehmer 381 und das Antriebskabel 38 mit dem Antriebsmotor 30 gekoppelt. Da der Antriebsmotor 30 auch zur Betätigung des bewegbaren Dachteils 14 dient, wird bei einer Öffnungsbewegung des bewegbaren Dachteils 14 der Auszugsspriegel 24 synchron zu diesem mit nach hinten bewegt, wobei sich gleichzeitig die Rollobahn 22 federbelastet auf die Rollowelle 26 aufrollt.

Soll bei geschlossenem Dachteil14 mehr Licht in den Fahrzeuginnenraum eingelassen werden, so kann durch eine Anhebung des Griffstücks 241 am Auszugsspriegel 24 eine Kippbewegung des Rasthakens 243 nach hinten oben bewirkt werden. Die Kippbewegung ist durch Pfeile in den Fign. 4 und 8 bis 10 symbolisiert. Dabei gerät der Rasthaken 243 in die in Figur 8 mit 243' bezeichnete Position, in der er außer Eingriff mit der Rastnase 382 des Mitnehmers 381 gerät. Gleichzeitig legt sich die hintere abgeschrägte Führungsfläche 244' an die Führung 19 an. Der Auszugsspriegel 24 kann in dieser zweiten Betriebsposition längs der Führung 19 manuell nach hinten geführt werden, so dass das Rollo 20 bei geschlossenem Dachteil 14 in seine geöffnete Position überführt werden kann.

Bei einer nachfolgenden Öffnungsbewegung des bewegbaren Dachteils 14 wird der Mitnehmer 381 durch die synchrone Bewegung der Antriebskabel 37 und 38 gleichzeitig mit dem vorderen Gleiter 141 nach hinten bewegt. Dabei läuft, wie in Figur 7b dargestellt, die Auflauframpe 383 gegen die Anlaufschräge 247, wodurch der Rasthaken 243 nach oben kippt und anschließend selbsttätig wieder in seine mit der Rastnase 382 am Mitnehmer 381 verriegelte erste Betriebsposition gerät. Dadurch wird das Rollo 20 bei einer nachfolgenden Schließbewegung des bewegbaren Dachteils 14 wieder selbsttätig mit in seine Schließposition genommen.

Selbstverständlich kann das manuell geöffnete Rollo auch manuell wieder in seine Schließposition gebracht werden. Durch nach vorne schieben des Auszugspriegels 24 gerät dabei der Rasthaken 243 in der vorderen Endlage wieder selbsttätig in Eingriff mit dem Mitnehmer 381.

Das manuelle Öffnen und Schließen des Rollos 20 läßt sich bei Bedarf optional auch bei teilweise geöffnetem Dachteil 14 realisieren. Da der Mitnehmer 381 durch die synchrone Bewegung der Antriebskabel 37 und 38 immer knapp hinter der Vorderkante des bewegbaren Dachteils 14 positioniert wird, liegt auch ein teilweise geschlossener Rollo 20 immer unter dem teilweise geöffneten Dachteil 14, so dass ein Flattern der Rollobahn 22 weitestgehend unterbunden wird.

Durch die Erfindung wird eine einfache Möglichkeit geschaffen, den Bedienkomfort und die Anzahl der Öffnungsvarianten eines Rollos zu erhöhen. Insbesondere bei einer Verwendung unterhalb eines bewegbaren Dachteils eines Festelement-Cabriolets ist es vorteilhaft, wenn das Rollo mittels desselben Antriebs betätigbar ist, der auch das bewegbare Dachteil antreibt. Hierdurch können sowohl wertvoller Bauraum als auch Gewicht am hinteren Dachteil 16 eingespart werden, die für einen separaten Antrieb des Rollos benötigt würden.

### Bezugszeichenliste

- 10: Fahrzeugdach
- 12: Windlauf
- 14: (bewegbares) Dachteil
- 141: (vorderer) Gleiter (von 14)
- 142: (hinterer) Gleiter (von 14)
- 16: (festes) Dachteil
- 17: Dachöffnung
- 18: Heckscheibe
- 19: Führung
- 20: Rollo
- 22: Rollobahn
- 24: Auszugspriegel
- 241: Griffstück (an 24)
- 242: Strebe
- 243: Rasthaken
- 244: Gleitstück
- 245: Griffmulde
- 246: Griffleiste
- 247: Anlaufschräge
- 26: Rollowelle
- 30: Antriebsmotor
- 32: Getriebe
- 34: Ritzel (für 38)
- 36: Ritzel (für 37)
- 37: Antriebskabel (für 14)
- 38: Antriebskabel (für 24)
- 381: Mitnehmer (an 38 für 24)
- 382: Rastnase (an 381)
- 383: Auflauframpe
- 40: Festhimmel

## Patentansprüche

1. Fahrzeugdach (10) mit wenigstens einem zur wenigstens teilweisen Freigabe einer Dachöffnung (17) bewegbaren, zumindest teilweise transparenten Dachteil (14) und mit einem Rollo (20), mittels dem das bewegbare Dachteil (14) zumindest in dessen Schließposition von unten abdeckbar ist, das eine Rollobahn (22), einen an deren Vorderkante angeordneten Auszugspriegel (24) und eine Rollowelle (26) zum Aufwickeln der Rollobahn (22) aufweist, wobei der Auszugspriegel (24) über einen Mitnehmer mit einem elektrischen Antriebsmotor (30) zum Verfahren des Auszugspriegels (24) längs einer Führung (19) gekoppelt ist, **dadurch gekennzeichnet, dass** der Auszugspriegel (24) lösbar mit einem mit dem Antriebsmotor (30) verbundenen Mitnehmer (381) gekoppelt ist, so dass sowohl eine Bedienung des Rollos (20) mittels des Antriebsmotors (30) als auch eine vom Antriebsmotor (30) entkoppelte manuelle Verschiebung des Rollos (20) möglich ist.

2. Fahrzeugdach nach Anspruch 1, **dadurch gekennzeichnet, dass** für den Antrieb des bewegbaren Dachteils (14) derselbe Antriebsmotor (30) verwendet wird wie zum Antrieb des Rollos (20).

3. Fahrzeugdach nach Anspruch 1 oder 2, **dadurch gekennzeichnet, dass** der Mitnehmer (381) eine Rastnase (382) aufweist, in die ein mit dem Auszugspriegel (24) verbundener Rasthaken (243) eingreift.

4. Fahrzeugdach nach einem der vorhergehenden Ansprüche, **dadurch gekennzeichnet, dass** das Entkoppeln des Auszugspriegels (24) durch eine Anhebe- bzw. Kippbewegung eines am Auszugsspriegel (24) vorgesehenen Griffstücks (241) eingeleitet wird.

5. Fahrzeugdach nach einem der vorhergehenden Ansprüche, **dadurch gekennzeichnet, dass** die Kopplung zwischen Mitnehmer (381) und Auszugspriegel (24) so gestaltet ist, das bei einer Relativbewegung beider Teile automatisch eine Kopplung erfolgt..

6. Fahrzeugdach nach Anspruch 5, **dadurch gekennzeichnet, dass** der Mitnehmer (381 eine nach hinten abfallende Auflauframpe (383) aufweist, die mit einer Anlaufschräge (247) an einem Riegelorgan (243) des Auszugspriegels (24) zusammenwirkt.

7. Fahrzeugdach nach einem der vorhergehenden Ansprüche, **dadurch gekennzeichnet, dass** das bewegbare Dachteil (14) einen Teil eines insgesamt zur Freigabe einer Cabriolet-artigen Dachöffnung in einen Stauraum bewegbaren Fahrzeugdachs bildet.

8. Fahrzeugdach nach Anspruch 7, **dadurch gekennzeichnet, dass** das bewegbare Dachteil (14) über ein dahinter angeordnetes zeitweise feststehendes Dachteil (16) verfahrbar ist, unter dessen Vorderkante die Rollowelle (26) angeordnet ist.

9. Fahrzeugdach nach einem der vorhergehenden Ansprüche, **dadurch gekennzeichnet, dass** der Auszugspriegel (24) des Rollos mit der Vorderkante des bewegbaren Dachteils (14) synchron bewegbar ist.

## Claims

1. Vehicle roof (10) with at least one at least partially transparent roof part (14) which can be moved so as to at least partially uncover a roof opening (17), and with a roller blind (20) by means of which the movable roof part (14) can be covered from below, at least when it is in its closed position, said roller blind comprising a roller blind curtain (22), a pull-out bow (24) arranged on the front edge of said curtain, and a roller blind shaft (26) for winding up the roller blind curtain (22), wherein the pull-out bow (24) is coupled via a driver to an electric drive motor (30) in order to move the pull-out bow (24) along a guide (19), **characterized in that** the pull-out bow (24) is releasably coupled to a driver (381) connected to the drive motor (30), with the result that it is possible both for the roller blind (20) to be operated by means of the drive motor (30) and for the roller blind (20) to be displaced manually while being uncoupled from the drive motor (30).

2. Vehicle roof according to Claim 1, **characterized in that** the same drive motor (30) is used for driving the movable roof part (14) as for driving the roller blind (20).

3. Vehicle roof according to Claim 1 or 2, **characterized in that** the driver (381) has a latching lug (382) in which a latching hook (243) connected to the pull-out bow (24) engages.

4. Vehicle roof according to one of the preceding claims, **characterized in that** uncoupling of the pull-out bow (24) is initiated by a lifting and/or tilting movement of a handle piece (241) provided on the pull-out bow (24).

5. Vehicle roof according to one of the preceding claims, **characterized in that** the coupling between driver (381) and pull-out bow (24) is configured such that coupling takes place automatically during a relative movement of the two parts.

6. Vehicle roof according to Claim 5, **characterized in that** the driver (381) has a rearwardly sloping run-up ramp (383) which interacts with a run-on bevel (247) on a locking member (243) of the pull-out bow (24).

7. Vehicle roof according to one of the preceding claims, **characterized in that** the movable roof part (14) forms part of a vehicle roof which can be moved as a whole into a stowage space in order to uncover a convertible-type roof opening.

8. Vehicle roof according to Claim 7, **characterized in that** the movable roof part (14) can be moved over an intermittently fixed roof part (16) which is arranged behind it and under whose front edge the roller blind shaft (26) is arranged.

9. Vehicle roof according to one of the preceding claims, **characterized in that** the pull-out bow (24) of the roller blind can be moved synchronously with the front edge of the movable roof part (14).

## Revendications

1. Toit de véhicule (10) comprenant au moins une partie de toit (14) au moins en partie transparente, déplaçable pour libérer au moins en partie une ouverture du toit (17), et un store (20), au moyen duquel la partie de toit déplaçable (14) peut être couverte par le dessous dans sa position de fermeture, lequel store présente une bande déroulante (22), un arceau de traction (24) disposé sur son arête avant et un arbre de store (26) pour enrouler la bande déroulante (22), l'arceau de traction (24) étant accouplé par le biais d'un dispositif d'entraînement à un moteur d'entraînement électrique (30) pour déplacer l'arceau de traction (24) le long d'un guide (19), **caractérisé en ce que** l'arceau de traction (24) est accouplé de manière desserrable à un dispositif d'entraînement (381) connecté au moteur d'entraînement (30), de sorte qu'à la fois une commande du store (20) au moyen du moteur d'entraînement (30) ainsi qu'un déplacement manuel du store (20) désaccouplé du moteur d'entraînement (30) soient possibles.

2. Toit de véhicule selon la revendication 1, **caractérisé en ce que** pour l'entraînement de la partie de toit déplaçable (14), on utilise le même moteur d'entraînement (30) que pour l'entraînement du store (20).

3. Toit de véhicule selon la revendication 1 ou 2, **caractérisé en ce que** le dispositif d'entraînement (381) présente un nez d'encliquetage (382) dans lequel s'engage un crochet d'encliquetage (243) connecté à l'arceau de traction (24).

4. Toit de véhicule selon l'une quelconque des revendications précédentes, **caractérisé en ce que** le désaccouplement de l'arceau de traction (24) est amorcé par un mouvement de soulèvement ou de basculement d'une poignée (241) prévue sur l'arceau de traction (24).

5. Toit de véhicule selon l'une quelconque des revendications précédentes, **caractérisé en ce que** l'accouplement entre le dispositif d'entraînement (381) et l'arceau de traction (24) est configuré de telle sorte qu'un accouplement s'effectue automatiquement lors d'un déplacement relatif des deux pièces.

6. Toit de véhicule selon la revendication 5, **caractérisé en ce que** le dispositif d'entraînement (381) présente une rampe d'entrée (383) descendant vers l'arrière, qui coopère avec un biseau de butée (247) sur un organe de verrouillage (243) de l'arceau de traction (24).

7. Toit de véhicule selon l'une quelconque des revendications précédentes, **caractérisé en ce que** la partie de toit déplaçable (14) forme une partie d'un toit de véhicule déplaçable dans l'ensemble pour libérer une ouverture de toit de type cabriolet dans un espace de rangement.

8. Toit de véhicule selon la revendication 7, **caractérisé en ce que** la partie de toit déplaçable (14) peut être déplacée par le biais d'une partie de toit (16) disposée derrière elle temporairement fixe, sous l'arête avant de laquelle est disposé l'arbre du store (26).

9. Toit de véhicule selon l'une quelconque des revendications précédentes, **caractérisé en ce que** l'arceau de traction (24) du store peut être déplacé de manière synchronisée avec l'arête avant de la partie de toit déplaçable (14).
